# EUROPÄISCHE PATENTANMELDUNG

(11) **EP 3 590 811 A2**
(43) Veröffentlichungstag der Anmeldung: **08.01.2020**
(21) Anmeldenummer: 19166330.1
(22) Anmeldetag: 29.03.2019
(51) Int. Cl.: B62M 3/00

(54) **LEISTUNGSMESSANORDNUNG**

(30) Priorität: 02.07.2018 DE 202018103775 U
(71) Anmelder: Scott Sports S.A., 1762 Givisiez (CH)
(72) Erfinder: SÜSSE, Rico, 1762 Givisiez (CH); PLANTET, Pierre-Geoffroy, 1762 Givisiez (CH)
(74) Vertreter: Klunker IP Patentanwälte PartG mbB

(57) **Zusammenfassung**

Die vorliegende Erfindung betrifft eine Messanordnung für ein Fahrrad zur Bestimmung einer Lageveränderung eines ersten Messorts relativ zu einem zweiten Messort an einem starren Bauteil (1, 2a, 2b, 13) in Folge einer vorbestimmten Deformation des starren Bauteils. Die Messanordnung umfasst zumindest einen ersten, freitragenden Ausleger (6), der derart an dem ersten Messort des starren Bauteils lagefest angeordnet ist oder mit dem ersten Messort lagefest verbunden ist, dass der ersten Ausleger zumindest einen ersten verlagerten Messpunkt definiert, der relativ zu dem zweiten Messort die gleiche Lageveränderung aufweist wie der erste Messort sowie eine Messsensorik (7, 8, 10; 11,12), die an dem ersten verlagerten Messpunkt und dem zweiten Messort oder dem zweiten verlagerten Messpunkt, angeordnet ist.

## Beschreibung

Die vorliegende Erfindung betrifft eine Messanordnung für ein Fahrrad zur Bestimmung einer Deformation eines starren Bauteils sowie ein Fahrrad mit einer derartigen Messanordnung.

Um die Leistungsabgabe eines Radfahrers beim Fahren zu bestimmen, ist es bekannt, Leistungsmessanordnungen am Fahrrad vorzusehen. Dabei wird beispielsweise die Deformation von Bauteilen des Antriebsstrangs bestimmt und daraus das auf das jeweilige Bauteil einwirkende Drehmoment oder die darauf einwirkende Kraft geschlossen. Daraus kann in bekannter Art und Weise bei Kenntnis oder durch Treffen von Annahmen hinsichtlich der Rotationsgeschwindigkeit des betreffenden Bauteils die abgegebene Leistung des Fahrers berechnet werden.

Zur Bestimmung der Deformation derartiger Bauteile ist es bekannt, Dehnungsmessstreifen zu verwenden. Diese weisen jedoch Nachteile auf. Beispielsweise ist es bereits schwierig, derartige Dehnungsmessstreifen auf langlebige Art und Weise mit dem zu vermessenden Bauteil zu verbinden. Weiterhin weisen Dehnungsmessstreifen üblicherweise lediglich kleine Abmessungen auf, sodass lediglich die Deformation in einem Teilbereich eines gegebenen Bauteils bestimmt werden kann, wobei zugleich der Kraft- oder Drehmomenteintrag auf das Bauteil üblicherweise über das Bauteil hinweg nicht gleichförmig ist. Zudem weisen die Dehnungsmessstreifen eine starke Temperaturabhängigkeit auf.

Weiterhin ist es auch bekannt, infolge von Deformation auftretende Phasendifferenzen beispielsweise optisch zu bestimmen. Eine derartige indirekte Messung ist jedoch zum einen meist ungenau und erfordert üblicherweise konstruktive Veränderungen an den umgebenden Bauteilen, beispielsweise an dem Rahmen.

Es ist daher Aufgabe der vorliegenden Erfindung, eine verbesserte Lösung zur Bestimmung der von einem Fahrer ausgeübten Tretkraft bzw. der abgegebenen Tretleistung anzugeben.

Diese Aufgabe wird durch die unabhängigen Ansprüche gelöst. Vorteilhafte Ausgestaltung und Weiterbildungen sind in den abhängigen Ansprüchen angegeben.

Die vorliegende Erfindung schafft eine Messanordnung für ein Fahrrad zur quantitativen Bestimmung einer Lageveränderung eines ersten Messorts an einem starren Bauteil relativ zu einem räumlich entfernten zweiten Messort an dem starren Bauteil in Folge einer vorbestimmten mechanischen Deformation des starren Bauteils. Das starre Bauteil ist dabei bevorzugt einstückig ausgebildet. Es kann jedoch auch aus zwei oder mehr miteinander fest verbundenen Bauteilen bestehen.

Das starre Bauteil ist Teil des Antriebsstrangs, der eine auf ein Pedal ausgeübte Tretkraft zu dem Hinterrad leitet, so dass die Deformation in Folge einer Tretkrafteinleitung eines Fahrers auf die Pedale beispielsweise während des Fahrens auftritt. Bei dem starren Bauteil handelt es sich daher beispielsweise um eine gegebenenfalls hohle Tretlagerwelle (auch Kurbelwelle oder Spindel genannt), um einen Kurbelstern (auch Kettenblatt- Kurbelstern oder -Spider genannt) oder um eine Kurbel (auch Tretkurbel genannt).

Bei der auftretenden Deformation bzw. Verformung des starren Bauteils kann es sich um eine Verwindung, Torsion, Biegung, Dehnung, Streckung, Stauchung, Verzerrung, Scherung oder um eine Kombination von einer oder mehreren der genannten Deformationsarten handeln.

Bei der relativen Lageveränderung der beiden Messorte handelt es sich entsprechend um eine räumliche Orts veränderung und/ oder um eine relative Orientierungs- bzw. Ausrichtungsveränderung. Dabei ist die Deformation des starren Körpers reversibel, elastisch und im einfachsten Fall proportional zu einer auf das starre Bauteil einwirkenden Kraft und/ oder einem einwirkenden Drehmoment.

Gemäß eines ersten Aspekts umfasst die erfindungsgemäße Messanordnung einen ersten, freitragenden Ausleger, der derart, vorzugsweise ausschließlich, an dem ersten Messort des starren Bauteils lagefest angeordnet ist oder mit dem ersten Messort lagefest verbunden ist - und dadurch im einfachsten Fall den Messort definiert -, dass der erste Ausleger einen zu dem ersten Messort korrespondierenden ersten verlagerten Messpunkt aufweist bzw. definiert, der relativ zu dem zweiten Messort, zumindest bei Auftreten der vorbestimmten Deformation des starren Bauteils, die gleiche bzw. identische Lageveränderung aufweist wie der erste Messort. Dabei ist der erste verlagerte Messpunkt verschieden von dem ersten Messort, das heißt von dem ersten Messort räumlich beabstandet. Bevorzugt wird der erste verlagerte Messpunkt von einem Ende bzw. einem freien Ende des ersten Auslegers gebildet.

Die erfindungsgemäße Messanordnung umfasst weiterhin eine Messsensorik zur Messung der relativen Lageveränderung zwischen dem ersten und dem zweiten Messort, wobei die Messsensorik an dem ersten verlagerten Messpunkt und dem zweiten Messort angeordnet ist bzw. auf diese beiden Orte verteilt ist und eine direkte Messung zwischen dem ersten verlagerten Messpunkt und dem zweiten Messort vornimmt.

Optional umfasst die erfindungsgemäße Messanordnung weiterhin einen zweiten, freitragenden Ausleger, der derart, vorzugsweise ausschließlich, an dem zweiten Messort des starren Bauteils lagefest angeordnet ist oder mit dem zweiten Messort lagefest verbunden ist - und dadurch im einfachsten Fall den Messort definiert -, dass der zweite Ausleger zumindest einen zweiten verlagerten Messpunkt aufweist bzw. definiert, der relativ zu dem ersten Messort bzw. relativ zu dem ersten verlagerten Messpunkt die gleiche bzw. die identische Lageveränderung aufweist wie der zweite Messort. Bevorzugt wird der zweite verlagerte Messpunkt von einem Ende bzw. einem freien Ende des zweiten Auslegers gebildet. Entsprechend ist bei Vorhandensein des zweiten Auslegers die Messsensorik zur Messung der relativen Lageveränderung zwischen dem ersten und dem zweiten Messort an dem ersten verlagerten Messpunkt und dem zweiten verlagerten Messpunkt angeordnet bzw. auf diese beiden Orte verteilt und nimmt eine direkte Messung zwischen ersten und zweitem verlagerten Messpunkt vor.

Dabei ist der erste und der gegebenenfalls zweite Ausleger derart ausgestaltet bzw. an dem starren Bauteil angebracht, dass in Folge der vorbestimmten Deformation des starren Bauteils keine Deformation des Auslegers bzw. der Ausleger auftritt. Dabei kann jeder Ausleger einstückig mit dem starren Bauteil ausgebildet sein oder ein von dem starren Bauteil verschiedenes Bauteil sein, das selbst vorzugsweise einstückig ausgebildet ist.

Erfindungsgemäß wird gemäß des ersten Aspekts wenigstens ein verlagerter Messpunkt für eine direkte Messung anhand der Messsensorik geschaffen, an welchem die gleiche Lageveränderung wie an dem zu Grunde liegenden bzw. für die Deformation des starren Bauteils relevanten Messort auftritt.

Bevorzugt ist der räumliche Abstand zwischen dem ersten verlagerten Messpunkt und dem zweiten Messort oder dem zweiten verlagerten Messpunkt kleiner als der räumliche Abstand zwischen dem ersten und dem zweiten Messort. Beispielsweise ist der Abstand zwischen dem ersten verlagerten Messpunkt und dem zweiten Messort oder dem zweiten verlagerten Messpunkt kleiner als 20 mm, 10 mm, 5 mm, 2 mm, 1 mm, 0,5 mm, 0,2 mm oder 0,1 mm. Der Abstand ist beispielsweise durch einen Luftspalt zwischen einem freien Ende des ersten Auslegers und dem zweiten Messort oder zwischen den freien Enden von erstem und zweitem Ausleger definiert. Dadurch werden die Messorte, zwischen denen die relative Lageveränderung zu bestimmen ist, effektiv räumlich angenähert wodurch mit Vorteil zusätzliche Messverfahren zum Einsatz kommen können bzw. Messsensoriken verwendet werden können, die bei großem Abstand der Messorte nicht geeignet sind. Geeignete Messsensoriken werden im Folgenden noch beispielhaft angegeben.

Es ist von Vorteil wenn der räumliche Abstand von erstem und zweitem Messort möglichst groß ist, da dadurch unter der vorbestimmten Deformation des starren Bauteils eine maximale relative Lageveränderung von erstem und zweitem Messort auftritt, was die Messgenauigkeit erhöht und die Anforderungen an die Messung vereinfacht. Entsprechend liegt der räumliche Abstand der ersten und zweiten Messorte bevorzugt zwischen 5 cm und 30 cm und beträgt beispielsweise 5 cm, 10 cm, 15 cm, 20 cm, 25 cm oder 30 cm, wobei jeder der genanten Werte auch eine Ober- oder Untergrenze des genanten Bereichs sein kann. Dabei liegt bevorzugt der erste und/oder der zweite Messort jeweils an einem Ende des starren Bauteils. Im einfachsten Fall liegen beide Messorte, also erster und zweiter Messort, jeweils an sich gegenüberliegenden Enden des starren Bauteils, wobei die Enden bevorzugt derart gewählt sind, dass eine oder die maximale relative Lageveränderung durch die vorbestimmte Deformation auftritt.

Die freitragende Länge eines Auslegers, also im einfachsten Fall die räumliche Verlagerung bzw. der Abstand zwischen einem Messort und dem jeweils zugeordneten, verlagerten Messpunkt, ist bevorzugt größer oder gleich 1 cm, 2 cm, 5 cm, 10 cm, 15 cm oder 20 cm und beträgt beispielsweise 1 cm, 2 cm, 3 cm, 5 cm, 10 cm, 15 cm, 20 cm, 25 cm oder 30 cm, wobei jeder der genannten Werte auch eine Ober- oder Untergrenze des genannten Bereichs sein kann. Dabei ist ein dem freien Ende eines Auslegers gegenüberliegendes Ende des Auslegers bevorzugt unmittelbar bzw. direkt an dem jeweiligen Messort angeordnet, so dass sich der Ausleger genau (nur) zwischen jeweiligem Messort auf dem starren Bauteil und dem jeweils verlagerten Messpunkt erstreckt.

In einer bevorzugten Ausgestaltung der erfindungsgemäßen Messanordnung sind beide erwähnten Ausleger vorgesehen. Vorzugsweise sind die Ausleger derart an dem starren Bauteil angeordnet, dass sich deren jeweilige freien Enden gegenüberstehen und entsprechend der Abstand der beiden Messpunkte klein ist. Es ist auch vorteilhaft wenn die freitragenden Abschnitte der beiden Ausleger eine identische Länge aufweisen. Besonders bevorzugt sind die freitragenden Abschnitte oder die gesamten Ausleger hinsichtlich sämtlicher Abmessungen und/oder der verwendeten Materialien, identisch ausgestaltet. Durch diese zumindest teilweise oder vollständig identische Ausgestaltung der beiden Ausleger zeigen diese beispielsweise ähnliche oder identische Auslenkungen deren freien Enden in Folge äußerer Erschütterungen, so dass in erster Näherung keine oder zumindest eine verringerte bzw. minimierte relative Lageveränderung der freien Enden und entsprechend der verlagerten Messpunkt in Folge äußerer Erschütterungen auftritt. Entsprechend wird der Einfluss äußerer Einwirkungen auf das durch die Messsensorik gewonnene Messsignal verringert bzw. minimiert.

Wie bereits erwähnt wird das starre Bauteil beispielsweise durch eine Tretlagerwelle, eine hohle Tretlagerwelle, einen Kurbelstern (Spider) oder eine Tretkurbel gebildet. Weist das starre Bauteil einen Hohlraum auf, wie beispielsweise eine hohle Tretlagerwelle, so ist der Ausleger vorzugsweise, teilweise oder vollständig innerhalb des Hohlraums angeordnet. Dadurch wird kein zusätzlicher Baurraum benötigt und der oder die innenliegenden Ausleger sind gegenüber äußeren Einwirkungen geschützt.

In einer bevorzugten Ausgestaltung wird als Messsensorik ein Magnet-Magnetsensor-Paar verwendet. Entsprechend ist beispielsweise an dem ersten verlagerten Messpunkt, das heißt im einfachsten Fall an dem freien Ende des ersten Auslegers, ein Magnet und an dem zweiten Messort oder dem zweiten verlagerten Messpunkt, das heißt im einfachsten Fall an dem freien Ende des zweiten Auslegers, ein Magnetsensor angeordnet. Alternativ kann der Magnet auch an dem zweiten Messort oder Messpunkt und der Magnetsensor an dem ersten Messpunkt angeordnet sein.

Dabei ist bevorzugt das Magnetfeld am Ort des Magnetsensor senkrecht oder parallel oder im Wesentlichen senkrecht oder parallel zu einer direkten Verbindungslinie zwischen Magnet und Magnetsensor ausgerichtet, wodurch eine maximale Magnetfeldveränderung am Magnetsensor in Folge einer relativen Lageveränderungen der Messorte bzw. Messpunkt gewährleistet wird. Es ist weiterhin bevorzugt einen Magneten ausreichender Stärke zu verwenden, so dass beispielsweise keine Störungen durch das Erdmagnetfeld auftreten und zudem ein starkes Messsignal am Magnetsensor zur Verfügung steht. Entsprechend wird bevorzugt ein Magnet verwendet, der am Magnetsensor ein Magnetfeld im Bereich von 10 mT bis 1 T verwendet, beispielsweise 10 mT, 20 mT, 50 mT, 100 mT, 200 mT, 500 mT oder 1000mT, wobei jeder der genanten Werte auch eine Ober- oder Untergrenze des genanten Bereichs sein kann. Dabei ist der Magnet bevorzugt ein Dauermagnet. Es ist prinzipiell aber auch denkbar als Magnetfeldquelle einen Elektromagnete oder einen remanent magnetisierten Bereich zu verwenden.

In einer alternativen, bevorzugten Ausgestaltung wird als Messsensorik ein Dreh- oder Schiebepotentiometer verwendet. Entsprechend ist beispielsweise der erste verlagerte Messpunkt mit einem Bedienelement des Dreh- oder Schiebepotentiometers fest verbunden, während das Dreh- oder Schiebepotentiometer an dem zweiten Messort oder Messpunkt angeordnet ist oder umgekehrt. Dabei ist das Potentiometer hinsichtlich der aus der vorbestimmten Deformation resultierenden Lageveränderung geeignet gewählt und angeordnet. Mit andern Worten entspricht vorzugsweise die Bewegungsrichtung des Bedienelement des Potentiometers (Drehung oder Verschiebung) der aus der vorbestimmten Deformation resultierenden relativen Lageveränderung der Messorte bzw. Messpunkte.

In einer alternativen, bevorzugten Ausgestaltung wird als Messsensorik eine Lichtquelle, ein Lichtsensor und eine vorzugsweise gemusterte Reflexionsfläche verwendet. Entsprechend ist beispielsweise an dem ersten verlagerten Messpunkt eine vorzugsweise gemusterte Reflexionsfläche angeordnet und an dem zweiten Messort oder dem zweiten verlagerten Messpunkt eine Lichtquelle und ein Lichtsensor angeordnet oder umgekehrt. Dabei wird die Reflexionsfläche von der Lichtquelle angestrahlt und der Lichtsensor detektiert das von der Reflexionsfläche zurückgeworfene Licht.

In einer weiteren alternativen, bevorzugten Ausgestaltung wird als Messsensorik eine Lichtquelle und ein Lichtsensor verwendet. Entsprechend ist beispielsweise an dem ersten verlagerten Messpunkt eine Lichtquelle angeordnet und an dem zweiten Messort oder dem zweiten verlagerten Messpunkt ein Lichtsensor angeordnet oder umgekehrt. Dabei ist der Lichtsensor eingerichtet relative Lageänderungen der Lichtquelle zu detektieren.

Gemäß eines zweiten Aspekts schafft die vorliegende Erfindung auch eine Messanordnung für ein Fahrrad zur quantitativen und direkten Bestimmung einer Lageveränderung eines ersten Messorts an einem starren Bauteil relativ zu einem räumlich entfernten zweiten Messort an dem starren Bauteil in Folge einer vorbestimmten mechanischen Deformation des starren Bauteils, welche im einfachsten Fall jedoch keinen wie oben beschriebenen Ausleger aufweist. Dagegen umfasst die Messanordnung gemäß des zweiten Aspekts eine an dem ersten Messort angeordnete Lichtquelle, bevorzugt eine Laserlichtquelle, die in Richtung des zweiten Messorts abstrahlt, sowie entweder eine an dem zweiten Messort angeordnete, vorzugsweise gemusterte Reflexionsfläche und einen an dem ersten Messort angeordneten Lichtsensor oder einen an dem zweiten Messort angeordneten Lichtsensor.

In einer bevorzugten Ausgestaltung weist das starre Bauteil einen innenliegenden Hohlraum auf, der vorzugsweise vollständig abgeschlossen ist. Dabei sind die Messorte bzw. die Lichtquelle und der Lichtsensor und gegebenenfalls die Reflexionsfläche in dem Hohlraum angeordnet. Dabei ist das starre Bauteil vorzugsweise eine hohle Tretlagerwelle.

Im Übrigen kann die Messanordnung gemäß des zweiten Aspekts soweit anwendbar wie die zuvor beschriebene Messanordnung gemäß des ersten Aspekts ausgestaltet sein.

Bevorzugt arbeitet die Messsensorik mit einer Repetitionsrate zwischen 10 und 1000 Hz. Das heißt die Messsensorik wird beispielsweise von einer Verarbeitungseinheit mit der genannten Repetitionsrate angesteuert bzw. abgetastet. Dies gestattet bei den zu erwartenden Tret- bzw. Rotationsfrequenzen bzw. -geschwindigkeiten des starren Bauteils eine ausreichend hohe (zeitliche) Auflösung. Die Repetitionsrate beträgt beispielsweise 10 Hz, 20 Hz, 50 Hz, 100 Hz, 200 Hz, 500 Hz oder 1000 Hz, wobei jeder der genanten Werte auch eine Ober- oder Untergrenze des genanten Bereichs sein kann.

Bevorzugt misst die Messsensorik die Lageveränderung der beiden Messorte mit einer Auflösung von wenigstens 20, wenigstens 50, wenigstens 100 oder wenigstens 200 Abtastwerten innerhalb der maximalen bzw. maximal zu erwartenden Lageveränderung. Dadurch wird die Deformation des starren Bauteil mit einer ausreichend hohen Auflösung bestimmt, um daraus nachfolgend die auf das starre Bauteil einwirkende Kraft bzw. das einwirkende Drehmoment bzw. die über die Pedale eingeleitete Tretkraft bzw. die von einem Fahrer abgegebene Tretleistung zu bestimmen. Typischerweise wird beispielsweise in einer Tretlagerwelle bei der zu erwartenden Maximalbelastung (beispielsweise eine 100kg entsprechende Kraft auf ein Pedal) eine Torsion von 1° um die Tretlagerachse bewirkt. Auch an anderen starren Bauteilen wie dem Kurbelstern oder der Kurbel sind die resultierenden Deformationen auch bei maximaler Belastung eher gering. Entsprechend ist die erzeugte Deformation auf das starre Bauteil proportional oder zumindest im Wesentlichen proportional zu der einwirkenden Kraft bzw. dem einwirkenden Drehmoment.

Bevorzugt umfasst die erfindungsgemäße Messanordnung eine an oder in dem starren Bauteil angeordnete Messeinrichtung zur Messung der Rotationsgeschwindigkeit des starren Bauteils, wobei diese Rotationsgeschwindigkeits-Messeinrichtung bevorzug als Gyroskop ausgestaltet ist und/oder bevorzugt mit einer Repetitionsrate zwischen 10 und 1000 Hz misst. Besonders bevorzugt misst die Rotationsgeschwindigkeits-Messeinrichtung mit der gleichen Repetitionsrate wie und insbesondere zeitgleich mit der Messsensorik für die Bestimmung der relativen Lageveränderung. Dadurch ergeben sich aus der der Messeinrichtung und der Messsensorik Datenpaare aus denen unmittelbar die (momentan) abgegebene Leistung berechnet werden kann.

Bevorzugt umfasst die erfindungsgemäße Messanordnung weiterhin einen vorzugsweise an oder in dem starren Bauteil angeordneten Funktransmitter zur drahtlosen Übertragung von Messsignalen bevorzugt gemäß des "ANT+"- oder Bluetooth-Funkstandards. Weiterhin umfasst die erfindungsgemäße Messanordnung vorzugsweise einen bevorzugt wiederaufladbaren Energiespeicher und/oder eine Verarbeitungseinheit etwa zur Ansteuerung der Messsensorik, der Rotationsgeschwindigkeits-Messeinrichtung und/oder des Funktransmitters und/oder zur Erfassung, Abtastung, Verarbeitung und/oder Bereitstellung von Messsignalen.

Die vorliegende Erfindung umfasst weiterhin ein Fahrrad, insbesondere ein Rennrad oder ein Mountainbike, umfassend eine wie oben beschriebene Messanordnung.

Weitere Vorteile der Erfindung werden nachfolgend anhand der in den begleitenden Figuren erläuterten Ausführungsbeispiele beschrieben. Die Ausführungsbeispiele stellen bevorzugte Ausführungsformen dar, die die Erfindung in keiner Weise einschränkt. Die gezeigten Figuren sind schematische Darstellungen, die die realen Proportionen nicht notwendigerweise widerspiegeln, sondern einer verbesserten Anschaulichkeit des jeweiligen Ausführungsbeispiels dienen. Im Einzelnen zeigen die Figuren:
- Figuren 1A, B, C: Draufsichten auf eine Tretlagerwelle;
- Figuren 2A, B: eine Seitenansicht und eine Draufsicht auf eine Tretkurbel; und
- Figuren 3A, B: Seitenansichten eines Kettenblatts mit Spider.

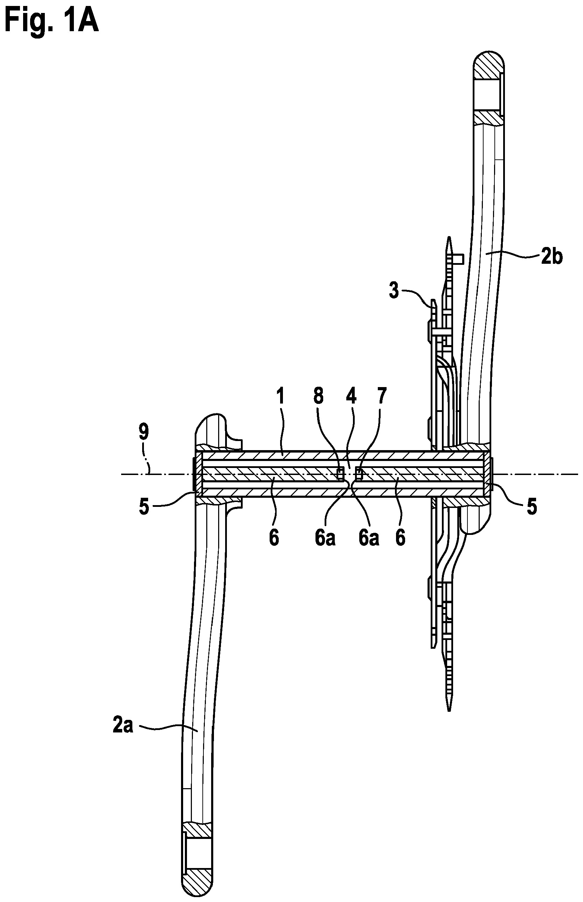

Figur 1A zeigt in Draufsicht eine hohle Tretlagerwelle 1 gemäß des ersten Aspekts mit einer angebauten linken Kurbel 2a und einer angebauten rechten Kurbel 2b sowie mit einem angebauten Kettenblatt 3 auf der Seite der rechten Kurbel 2b. Die hohle Tretlagerwelle 1 weist den in Figur 1A dargestellten Hohlraum 4 auf, der seitlich beispielsweise mit Abdeckungen 5 verschlossen ist. In dem gezeigten Ausführungsbeispiel sind ausgehend von den Abdeckungen 5 freitragende Ausleger 6 vorgesehen, die in den innenliegenden Hohlraum 4 hineinragen. Entsprechend sind die Ausleger 6 jeweils mit den Enden der Tretlagerwelle 1 lagefest verbunden während eine durch eine Tretkraft bewirkte Verwindung bzw. Torsion der Tretlagerwelle 1 innerhalb der freitragenden Ausleger 6 nicht auftritt. Die Ausleger 6 weisen sich gegenüberliegende freie Enden 6a auf, die in dem gezeigten Ausführungsbeispiel voneinander einen vernachlässigbaren Abstand aufweisen während die Enden der Tretlagerwelle einen Abstand von 120 mm aufweisen. Dabei ist in dem gezeigten Ausführungsbeispiel jeweils ein Magnet 7 und ein Magnetsensor 8 in den jeweiligen freien Enden 6a der beiden Ausleger 6 integriert. Alternativ können Magnet 7 und/oder Magnetsensor 8 auch auf oder an den sich gegenüberliegenden freien Enden 6a der Ausleger 6 angeordnet sein. Dabei weist das von dem Magneten 7 erzeugte Magnetfeld am Ort des Magnetsensors 8 senkrecht zu der Tretlagerachse 9.

Allgemein ist der Abstand zwischen den freien Enden 6a bzw. zwischen Magnet 7 und Magnetsensor 8 möglichst klein um eine maximale Magnetfeldstärke bzw. magnetische Durchdringung am Ort des Magnetsensor 8 zu gewährleisten.

Durch Einleiten einer Tretkraft in die Pedale der linken Kurbel 2a tritt eine Torsion der Tretlagerwelle 1 auf. Da die Ausleger 6 jeweils mit den gegenüberliegenden Enden der Tretlagerwelle 1 lagefest verbunden sind (im vorliegenden Ausführungsbeispiel über die Abdeckungen 5) verwinden sich jeweils die freitragenden Ausleger 6 vollständig und insbesondere deren jeweiliges freies Ende 6a genauso wie die Enden der Tretlagerwelle 1. Mit anderen Worten kann an den freien Enden 6a der Ausleger 6 die Deformation bzw. Torsion der Tretlagerwelle 1 gemessen werden, die an den Enden der Tretlagerwelle 1 auftritt. Somit kann an den nahe beieinander liegenden freien Enden 6a (Messpunkte) der freitragenden Ausleger 6 die relative Lageänderung der voneinander weit entfernt liegenden Enden der Tretlagerwelle 1 (Messorte) detektiert werden. Diese verringerte Distanz ermöglicht beispielsweise den Einsatz eines wie oben beschriebenen Magnet-Magnetsensor-Paares zur Messung der relativen Lageveränderung der Enden der Tretlagerwelle 1.

Es ist zu beachten, dass die oben beschriebene Verwindung der Tretlagerwelle 1 nur bei Einleitung einer Tretkraft über die linke Kurbel 2a auftritt, da das Kettenblatt 3 in der Nähe der rechten Kurbel angeordnet ist. Bei Einleitung einer Tretkraft auf das Pedal der rechten Kurbel 2b findet lediglich eine geringfügige Verwindung der Tretlagerwelle 1 im Bereich zwischen rechter Kurbel 2b und Kettenblatt 3 statt.

In einem nicht dargestellten Ausführungsbeispiel sind an den freien Enden 6a der freitragenden Ausleger 6 anstelle eines Magnet-Magnetsensor-Paares eine Lichtquelle, ein Lichtsensor sowie gegebenenfalls eine Reflexionsfläche verbaut. Beispielsweise beleuchtet eine an einem ersten freien Ende 6a angeordnete Lichtquelle eine auf dem gegenüberliegenden zweiten freien Ende 6a angeordnete Reflektionsfläche, deren zurückgeworfenes Licht von einem auf dem ersten freien Ende 6a angeordneten Lichtsensor gemessen wird, um die relative Lageänderung der freien Enden 6a relativ zueinander zu detektieren.

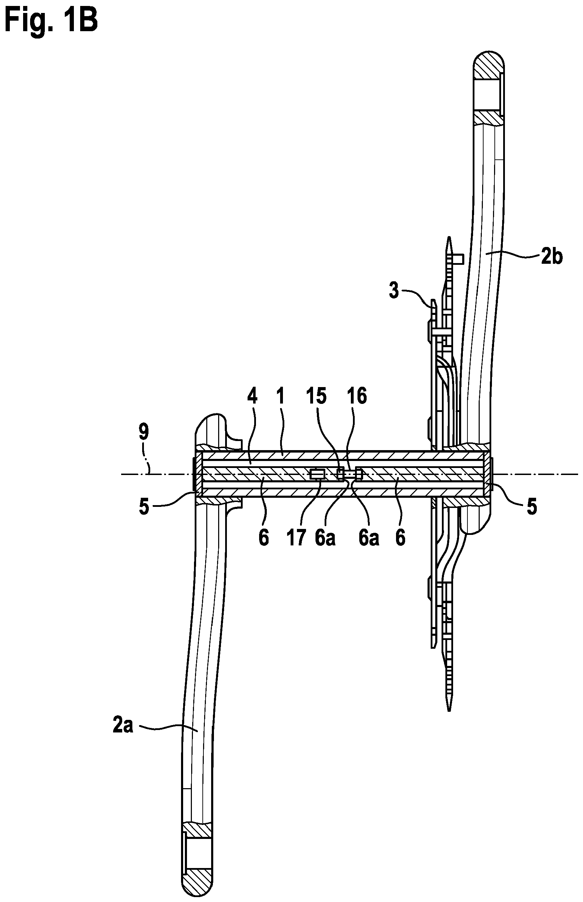

In dem in Figur 1B dargestellten Ausführungsbeispiel ist auf einem ersten freien Ende 6a ein Dreh- bzw. Rotationspotentiometer 15 mit einem Bedien-Drehknopf 16 vorgesehen, dessen Achse mit der Tretlagerachse 9 zusammenfällt. Der Bedien-Drehknopf 16 des Drehpotentiometers 15 ist mit dem gegenüberliegenden zweiten freien Ende 6a verbunden, sodass infolge einer Verwindung der Tretlagerwelle 1 das Drehpotentiometer betätigt wird. Weiterhin ist in Figur 1B schematisch eine Steuereinheit 17 zu Ansteuerung des Drehpotentiometers 15 dargestellt.

In einem weiteren nicht dargestellten Ausführungsbeispiel ist in dem innenliegenden Hohlraum 4 der Tretlagerwelle 1 lediglich ein einziger Ausleger 6 vorgesehen, der an einem ersten Ende der Tretlagerwelle 1 fest angeordnet ist und sich freitragend zumindest im Wesentlichen über den gesamten Hohlraum 4 bis in die Nähe des gegenüberliegenden zweiten Endes der Tretlagerwelle 1 erstreckt. In diesem Falle können die obengenannten Messsensoriken auf das freie Ende 6a des einzigen freitragenden Auslegers 6 sowie das gegenüberliegende Ende der Tretlagerwelle 1 verteilt werden.

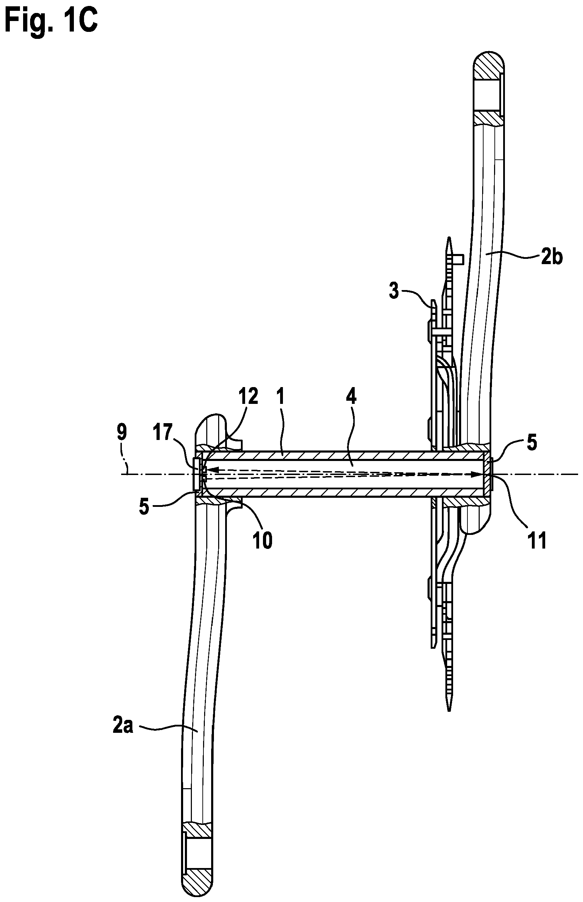

In dem in Figur 1C dargestellten Ausführungsbeispiel ist wiederum eine hohle Tretlagerwelle 1 mit einem innenliegenden Hohlraum 4 gezeigt, in welchem in Abweichung zu dem vorherigen Ausführungsbeispiel keine freitragenden Ausleger 6 vorgesehen sind. Vielmehr wird der innenliegende Hohlraum 4 verwendet um die Lageveränderung der beiden sich gegenüberliegenden Enden der Tretlagerwelle 1 optisch und direkt zu messen. Dazu ist an einem Ende der Tretlagerwelle 1 bzw. wie in dem Ausführungsbeispiel dargestellt, auf einer Abdeckung 5, eine Lichtquelle 10 in Form einer Laserlichtquelle 10 angeordnet, die das Licht gerichtet in Richtung des gegenüberliegenden Endes der Tretlagerwelle 1 abstrahlt. Auf der Abdeckung 5 des gegenüberliegenden Endes der Tretlagerwelle 1 ist eine Reflektionsfläche 11 angeordnet bzw. dieses Ende wird als Reflektionsfläche genutzt. Beispielsweise ist die Reflektionsfläche 11 gemustert und spiegelnd reflektierend. Das zurückgeworfene Licht wird von dem Lichtsensor 12 detektiert woraus beispielsweise eine Steuereinheit 17, die beispielsweise in oder auf der Abdeckung 5 angeordnete ist die relative Lageveränderung der beiden Enden der Tretlagerwelle 1 ermittelt. Selbstverständlich kann die Steuereinheit 17 auch an einer anderen Stelle an, in oder in der Nähe der Tretlagerwelle 1 angeordnet sein. Dabei kann die Signalübertragung zwischen Steuereinheit 17 und Lichtquelle 10 bzw. Lichtsensor 12 kabellos oder kabelgebunden stattfinden.

In einer nicht dargestellten Variante dieses Ausführungsbeispiels wird auf die Reflektionsfläche 11 verzichtet und die Lichtquelle 10 und der Lichtsensor 11 werden auf den sich gegenüberliegenden Enden der Tretlagerwelle 1 angeordnet.

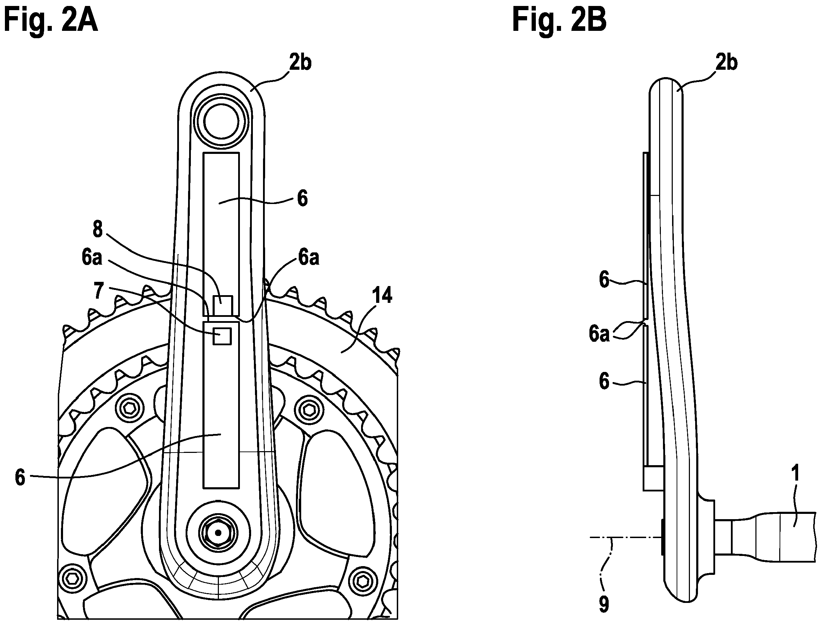

In dem in Figur 2A und B dargestellten Ausführungsbeispiel wird anstelle der Tretlagerwelle 1 eine Kurbel, hier die rechte Kurbel 2b als starres Bauteil verwendet, dessen Deformation gemessen wird. Entsprechend sind an sich gegenüberliegenden Enden bzw. in der Nähe der Enden der Kurbel 2b (hier außenliegende) Ausleger 6 angeordnet (siehe Draufsicht in Figur 2B), die sich bis zu den jeweiligen freien Enden 6a freitragend aufeinander zu erstrecken. Wie in dem zuvor besprochenen Ausführungsbeispiel der Figur 1A sind an den freien Enden 6a jeweils ein Magnet 7 und ein Magnetsensor 8 angeordnet. Dabei findet an den sich gegenüberliegenden freien Enden 6a der freitragenden Ausleger 6 bei Deformation der Kurbel 2b eine Verkippung der freien Enden 6a relativ zueinander statt. Entsprechend zeigt in diesem Fall am Ort des Magnetsensors 8 das von dem Magneten 7 erzeugte Magnetfeld beispielsweise in Richtung des Magnetsensors 8, welcher entsprechend eine Änderung der Magnetfeldrichtung bei Deformation der Kurbel 2b detektiert. Alternativ kann das Magnetfeld am Magnetsensor 8 auch parallel zu der Tretlagerachse 9 oder in azimutaler Richtung bezüglich der Tretlagerachse 9 ausgerichtet sein.

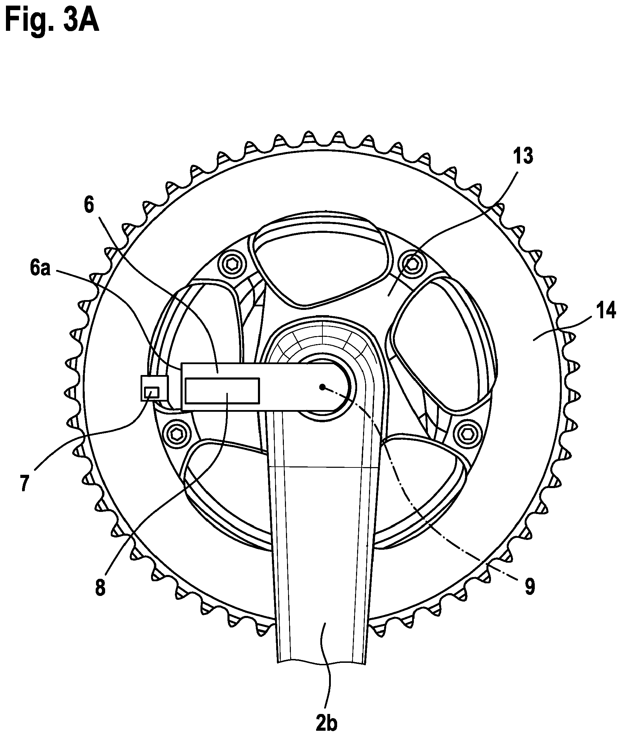

In dem Ausführungsbeispiel der Figur 3A wird die Deformation an einem fünfarmigen Kettenblatt-Kurbelstern bzw. einer fünfarmigen Kettenblatt-Spider 13 als starres Bauteil des Antriebsstrangs bestimmt. Dazu ist ein Magnet 7 an einem äußeren Radius des Kettenblatt-Kurbelsterns 13 oder wie in Figur 3A dargestellt, außerhalb des Kurbelsterns 13 unmittelbar auf dem Kettenblatt 14 angeordnet. Auf Höhe der Tretlagerachse 9 ist ein Ausleger 6 befestigt, der sich ansonsten freitragend in Richtung des Magneten 8 erstreckt, so dass sich das freie Ende 6a des Auslegers 6 bis unmittelbar an den Magneten 7 erstreckt. An dem freien Ende 6a des Auslegers 6 ist wiederum ein Magnetsensor 8 angeordnet. Bei Deformation des Kettenblatt-Kurbelsterns infolge einer Tretkrafteinleitung auf eine der Pedalen der Kurbeln 2a oder 2b bewegt sich das freie Ende 6a des Auslegers 6 relativ zu dem Magneten 7 um die Tretlagerachse 9 herum (Rotation um die Tretlagerachse 9). Insofern ergibt sich am freien Ende 6a relativ zu dem Magneten 7 eine im Wesentlichen translatorische Bewegung. Entsprechend ist der Magnet 7 beispielsweise so eingestellt, dass sein Magnetfeld am Magnetsensor 8 parallel zu der Tretlagerachse 9 gerichtet ist. Alternativ kann das Magnetfeld am Magnetsensor 8 auch in azimutaler Richtung bezüglich der Tretlagerachse 9 ausgerichtet sein oder vom Magneten 7 in Richtung des Magnetsensors 8 zeigen.

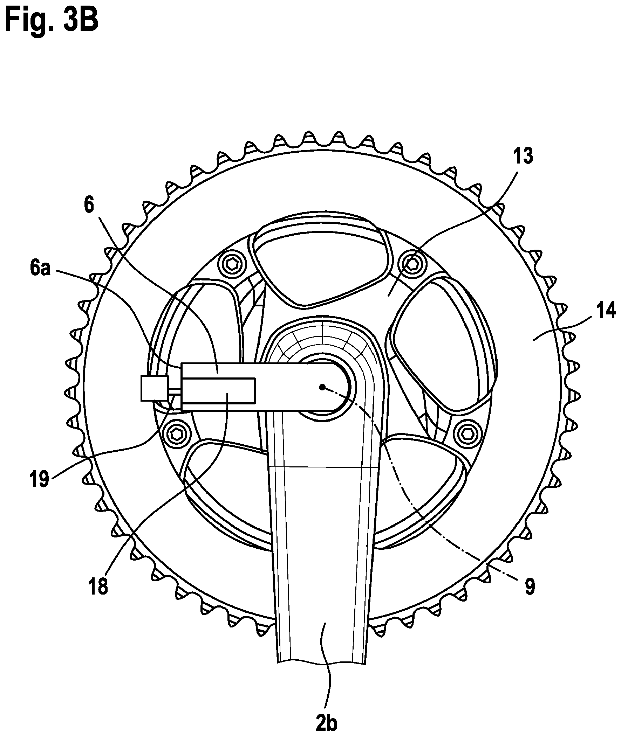

In dem in Figur 3B dargestellten Ausführungsbeispiel wird anstelle des Magnet-/Magnetsensorpaars ein Schiebepotentiometer 18 verwendet, das auf dem freien Ende 6a des Auslegers 6 angeordnet ist und dessen Bedienelement 19 fest mit dem Kettenblatt 14 oder einem äußeren Radius des Kettenblatt-Kurbelsterns 13 verbunden ist.

Im Folgenden werden bevorzugte Ausgestaltungsbeispiele der Erfindung beschrieben.
A1. Messanordnung für ein Fahrrad zur Bestimmung der relativen Torsion von sich gegenüberliegenden axialen Enden einer hohlen Tretlagerwelle (1) beim Treten, umfassend einen ersten Ausleger (6), der mit einem ersten Ende der Tretlagerwelle fest verbunden ist und sich freitragend entlang einer Tretlagerachse (9) in einem Hohlraum der hohlen Tretlagerwelle in Richtung eines zweiten, gegenüberliegenden Endes der Tretlagerwelle bis zu einem freien Ende (6a) des ersten Auslegers erstreckt, wobei zumindest ein Teil einer Messsensorik (7, 8, 10, 11, 12) an dem freien Ende des ersten Auslegers angeordnet ist.
A2. Messanordnung nach Absatz A1, gekennzeichnet durch einen zweiten Ausleger (6), der mit dem zweiten Ende der Tretlagerwelle (1) fest verbunden ist und sich freitragend entlang der Tretlagerachse (9) in dem Hohlraum der hohlen Tretlagerwelle in Richtung des gegenüberliegenden ersten Endes der Tretlagerwelle bis zu einem freien Ende (6a) des zweiten Auslegers erstreckt, so dass sich die freien Enden von erstem und zweitem Ausleger gegenüberstehen, wobei der übrige Teil der Messsensorik (7, 8, 10, 11, 12) an dem freien Ende des zweiten Auslegers angeordnet ist.
A3. Messanordnung nach Absatz A1, dadurch gekennzeichnet, dass der übrige Teil der Messsensorik (7, 8, 10, 11, 12) an dem zweiten Ende der Tretlagerwelle (1) angeordnet ist.
A4. Messanordnung nach einem der Absätze A1 bis A3, dadurch gekennzeichnet, dass an dem freien Ende (6a) des ersten Auslegers (6) ein Magnet (7) angeordnet ist und an dem freien Ende (6a) des zweiten Auslegers (6) oder an dem zweiten Ende der Tretlagerwelle ein Magnetsensor (8) angeordnet ist oder umgekehrt.
A5. Messanordnung nach Absatz A4, dadurch gekennzeichnet, dass das Magnetfeld des Magneten (7) am Ort des Magnetsensors (8) senkrecht oder im Wesentlichen senkrecht zu der Tretlagerachse (9) ausgerichtet ist.
A6. Messanordnung nach einem der Absätze A4 oder A5, dadurch gekennzeichnet, dass der Abstand zwischen Magnet (7) und Magnetsensor (8) kleiner als 20mm, 10mm, 5mm, 2mm, 1mm, 0,5mm ist.
A7. Messanordnung nach einem der Absätze A1 bis A3, dadurch gekennzeichnet, dass an dem freien Ende (6a) des ersten Auslegers (6) eine vorzugsweise gemusterte Reflexionsfläche (11) angeordnet ist und an dem freien Ende (6a) des zweiten Auslegers (6) oder an dem zweiten Ende der Tretlagerwelle (1) eine Lichtquelle (10) und ein Lichtsensor (12) angeordnet ist oder umgekehrt.
A8. Messanordnung nach Absatz A7, dadurch gekennzeichnet, dass der Abstand zwischen Reflexionsfläche (11) und Lichtquelle (10) bzw. Lichtsensor (12) kleiner als 20 mm, 10 mm, 5 mm, 2 mm, 1 mm, 0,5 mm, 0,2 mm oder 0,1 mm ist.
A9. Messanordnung nach einem der Absätze A1 bis A3, dadurch gekennzeichnet, dass an dem freien Ende (6a) des ersten Auslegers (6) eine Lichtquelle (10) angeordnet ist und an dem freien Ende (6a) des zweiten Auslegers (6) oder an dem zweiten Ende der Tretlagerwelle (1) ein Lichtsensor (12) angeordnet ist oder umgekehrt.
A10. Messanordnung nach einem der Absätze A1 bis A3, dadurch gekennzeichnet, dass an dem freien Ende (6a) des zweiten Auslegers (6) oder an dem zweiten Ende der Tretlagerwelle (1) eine Drehpotentiometer angeordnet ist und das freie Ende (6a) des ersten Auslegers (6) mit einem Einstell-Drehrad des Drehpotentiometers fest verbunden ist, wobei bevorzugt die Achse des Einstell-Drehrads des Drehpotentiometers und die Tretlagerachse (9) zusammenfallen.
B1. Messanordnung für ein Fahrrad zur Bestimmung der relativen Verwindung von sich gegenüberliegenden axialen Enden einer hohlen Tretlagerwelle (1) beim Treten, umfassend eine an einem ersten Ende angeordnete Lichtquelle (10), bevorzugt Laserlichtquelle, die in Richtung des zweiten Endes abstrahlt, sowie entweder eine an dem zweiten Ende angeordnete, vorzugsweise gemusterte Reflexionsfläche (11) und ein an dem ersten Ende angeordneter Lichtsensor (12) oder ein an dem zweiten Ende angeordneter Lichtsensor (12).
C1. Messanordnung für ein Fahrrad zur Bestimmung der relativen Deformation eines Kettenblatt-Kurbelsterns (13) beim Treten, umfassend einen ersten Ausleger (6), der zentral am Kettenblatt (14) oder den Kettenblatt-Kurbelstern (13) bzw. an der Tretlagerwelle (1) angebracht ist und sich auf der Kettenblatt-Innen- oder -Außensseite freitragend, radial nach außen bis zu einem freien Ende (6a) des ersten Auslegers (6) erstreckt, wobei zumindest ein Teil einer Messsensorik (7, 8) an dem freien Ende (6a) des ersten Auslegers (6) angeordnet ist.
C2. Messanordnung nach Absatz C1, gekennzeichnet durch einen zweiten Ausleger (6), der radial außen an dem Kettenblatt-Kurbelstern (13) oder einem Kettenblatt (14) angebracht ist und sich freitragend, radial nach innen bis zu einem freien Ende (6a) des zweiten Auslegers (6)erstreckt, so dass sich die freien Enden (6a) von erstem und zweitem Ausleger (6) gegenüberstehen, wobei der übrige Teil der Messsensorik (7, 8) an dem freien Ende (6a) des zweiten Auslegers (6) angeordnet ist.
C3. Messanordnung nach Absatz C1, dadurch gekennzeichnet, dass der übrige Teil der Messsensorik (7, 8) radial außen an dem Kettenblatt-Kurbelstern (13) oder einem Kettenblatt (14) angebracht ist.
C4. Messanordnung nach einem der Absätze C1 bis C3, dadurch gekennzeichnet, dass an dem freien Ende (6a) des ersten Auslegers (6) ein Magnet (7) angeordnet ist und an dem freien Ende (6a) des zweiten Auslegers (6) oder radial außen an dem Kettenblatt-Kurbelstern (13) oder an dem Kettenblatt (14) ein Magnetsensor (8) angeordnet ist oder umgekehrt.
C5. Messanordnung nach Absatz C4, dadurch gekennzeichnet, dass das Magnetfeld am Ort des Magnetsensors (8) parallel oder im Wesentlichen parallel zu einer Tretlagerachse (9) oder in azimutaler Richtung bezüglich der Tretlagerachse (9) ausgerichtet ist oder in Richtung des Magnetsensors (8) zeigt.
C6. Messanordnung nach Absatz C4 oder C5, dadurch gekennzeichnet, dass der Abstand zwischen Magnet (7) und Magnetsensor (8) kleiner als 20mm, 10mm, 5mm, 2mm, 1mm, 0,5mm ist.
C7. Messanordnung nach einem der Absätze C1 bis C3, dadurch gekennzeichnet, dass an dem freien Ende (6a) des zweiten Auslegers (6) oder radial außen an dem Kettenblatt-Kurbelstern (13) oder an dem Kettenblatt (14) eine Schiebepotentiometer angeordnet ist und das freie Ende (6a) des ersten Auslegers (6) mit einem Einstell-Schieber des Schiebepotentiometers fest verbunden ist.
D1. Messanordnung für ein Fahrrad zur Bestimmung der relativen Biegung einer Tretkurbel (2a, 2b) beim Treten, umfassend einen ersten Ausleger (6), der an einem ersten Ende der Tretkurbel oder in der Nähe des ersten Endes der Tretkurbel mit der Tretkurbel fest verbunden ist und sich auf der Kurbel-Innen- oder -Außensseite freitragend in Richtung eines gegenüberliegenden zweiten Endes der Tretkurbel bis zu einem freien Ende (6a) des ersten Auslegers (6) erstreckt, wobei zumindest ein Teil einer Messsensorik (7, 8) an dem freien Ende des ersten Auslegers angeordnet ist.
D2. Messanordnung nach Absatz D1, gekennzeichnet durch einen zweiten Ausleger (6), der an einem zweiten Ende der Tretkurbel (2a, 2b) oder in der Nähe des zweiten Endes der Tretkurbel mit der Tretkurbel fest verbunden ist und sich freitragend in Richtung des gegenüberliegenden ersten Endes der Tretkurbel bis zu einem freien Ende (6a) des zweiten Auslegers (6) erstreckt, wobei zumindest ein Teil einer Messsensorik (7, 8) an dem freien Ende des zweiten Auslegers angeordnet ist.
D3. Messanordnung nach Absatz D1, dadurch gekennzeichnet, dass der übrige Teil der Messsensorik (7, 8) an dem zweiten Ende der Tretkurbel (2a, 2b) angeordnet ist.
D4. Messanordnung nach einem der Absätze D1 bis D3, dadurch gekennzeichnet, dass an dem freien Ende (6a) des ersten Auslegers (6) ein Magnet (7) angeordnet ist und an dem freien Ende (6a) des zweiten Auslegers (6) oder an dem zweiten Ende der Tretlagerwelle ein Magnetsensor (8) angeordnet ist oder umgekehrt.
D5. Messanordnung nach Absatz D4, dadurch gekennzeichnet, dass das Magnetfeld am Ort des Magnetsensors (8) parallel oder im Wesentlichen parallel zu einer Tretlagerachse (9) oder in azimutaler Richtung bezüglich der Tretlagerachse (9) ausgerichtet ist oder in Richtung des Magnetsensors (8) zeigt.
D6. Messanordnung nach einem der Absätze D4 oder D5, dadurch gekennzeichnet, dass der Abstand zwischen Magnet (7) und Magnetsensor (8) kleiner als 20 mm, 10 mm, 5 mm, 2 mm, 1 mm, 0,5 mm, 0,2 mm oder 0,1 mm ist
E1. Messanordnung für ein Fahrrad zur Bestimmung einer Lageveränderung eines ersten Messorts relativ zu einem zweiten Messort an einem starren Bauteil (1, 2a, 2b, 13) in Folge einer vorbestimmten Deformation des starren Bauteils, umfassend
   - einen ersten, freitragenden Ausleger (6), der derart an dem ersten Messort des starren Bauteils lagefest angeordnet ist oder mit dem ersten Messort lagefest verbunden ist, dass der ersten Ausleger zumindest einen ersten verlagerten Messpunkt definiert, der relativ zu dem zweiten Messort die gleiche Lageveränderung aufweist wie der erste Messort, sowie
   - optional einen zweiten, freitragenden Ausleger (6), der derart an dem zweiten Messort des starren Bauteils lagefest angeordnet ist oder mit dem zweiten Messort lagefest verbunden ist, dass der zweite Ausleger zumindest einen zweiten verlagerten Messpunkt definiert, der relativ zu dem ersten Messort die gleiche Lageveränderung aufweist wie der zweite Messort,
   - eine Messsensorik (7, 8, 10; 11, 12), die an dem ersten verlagerten Messpunkt und dem zweiten Messort oder dem zweiten verlagerten Messpunkt, angeordnet ist.
E2. Messanordnung nach Absatz E1, dadurch gekennzeichnet, dass der räumliche Abstand zwischen dem ersten verlagerten Messpunkt und dem zweiten Messort oder dem zweiten verlagerten Messpunkt kleiner ist als der räumliche Abstand zwischen dem ersten und dem zweiten Messort und bevorzugt beträgt der Abstand zwischen dem ersten verlagerten Messpunkt und dem zweiten Messort oder dem zweiten verlagerten Messpunkt weniger als 20mm, 10mm, 5mm, 2mm, 1mm, 0,5 mm, 0,2 mm oder 0,1 mm.
E3. Messanordnung nach Absatz E1 oder E2, dadurch gekennzeichnet, dass der räumliche Abstand von erstem und zweitem Messort zwischen 5 cm und 30 cm liegt und beispielsweise 5 cm, 10 cm, 15 cm, 20 cm, 25 cm, oder 30 cm beträgt.
E4. Messanordnung nach einem der vorhergehenden Absätze, dadurch gekennzeichnet, dass der erste und zweite Messort jeweils an gegenüberliegenden Enden des starren Bauteils (1, 2a, 2b, 13) liegen.
E5. Messanordnung nach einem der vorhergehenden Absätze, dadurch gekennzeichnet, dass die vorbestimmte Deformation in Folge einer Tretkrafteinleitung auftritt.
E6. Messanordnung nach einem der vorhergehenden Absätze, dadurch gekennzeichnet, dass der oder die verlagerten Messpunkte durch ein Ende, bevorzugt ein freies Ende (6a) des jeweiligen Auslegers (6) gebildet werden.
E7. Messanordnung nach einem der vorhergehenden Absätze, dadurch gekennzeichnet, dass ein einem freien Ende (6a) des Auslegers (6) gegenüberliegendes Ende des Auslegers direkt an dem jeweiligen Messort angeordnet ist.
E8. Messanordnung nach einem der vorhergehenden Absätze, dadurch gekennzeichnet, dass der oder die Ausleger einen freitragenden Abschnitt mit einer Länge von wenigstens 1 cm, 2 cm, 5 cm, 10 cm, 15 cm oder 20 cm aufweisen.
E9. Messanordnung nach einem der vorhergehenden Absätze, dadurch gekennzeichnet, dass darin erster und zweiter Ausleger (6) vorgesehen sind, wobei sich vorzugsweise deren freie Enden (6a) gegenüberstehen und/oder wobei bevorzugt die freitragenden Abschnitte der Ausleger eine identische Länge aufweisen und besonders bevorzugt die freitragenden Abschnitte oder die gesamten Ausleger identische Abmessungen aufweisen.
E10. Messanordnung nach einem der vorhergehenden Absätze, dadurch gekennzeichnet, dass die relative Lageveränderung der Messorte bzw. der verlagerten Messpunkte durch eine räumliche Ortsveränderung und/oder durch eine Veränderung der relativen Orientierung bzw. Ausrichtung gebildet wird.
E11. Messanordnung nach einem der vorhergehenden Absätze, dadurch gekennzeichnet, dass die Deformation des starren Körpers (1, 2a, 2b, 13) proportional zur einwirkenden Kraft und/oder zum einwirkenden Drehmoment ist.
E12. Messanordnung nach einem der vorhergehenden Absätze, dadurch gekennzeichnet, dass das starre Bauteil (1, 2a, 2b, 13) eine Tretlagerwelle (1), vorzugsweise eine hohle Tretlagerwelle, ein Kurbelstern (13) oder eine Tretkurbel (2a, 2b) ist.
E13. Messanordnung nach einem der vorhergehenden Absätze, dadurch gekennzeichnet, dass das starre Bauteil eine hohle Tretlagerwelle (1) ist und der oder die Ausleger innerhalb des Hohlraums (4) angeordnet ist/sind.
E14. Messanordnung nach einem der vorhergehenden Absätze, dadurch gekennzeichnet, dass an dem ersten verlagerten Messpunkt ein Magnet (7) und an dem zweiten Messort oder zweiten verlagerten Messpunkt ein Magnetsensor (8) angeordnet ist oder umgekehrt, wobei bevorzugt das Magnetfeld am Ort des Magnetsensor senkrecht oder im Wesentlichen senkrecht oder parallel zu einer direkten Verbindungslinie zwischen Magnet und Magnetsensor ausgerichtet ist und/oder der Magnet ein Magnetfeld im Bereich von 10mT bis 1T erzeugt.
E15. Messanordnung nach einem der vorhergehenden Absätze, dadurch gekennzeichnet, dass mit dem ersten verlagerten Messpunkt ein Bedienelement für ein Dreh- oder Schiebepotentiometer fest verbunden ist und das Dreh- oder Schiebepotentiometer an dem zweiten Messort oder Messpunkt angeordnet ist oder umgekehrt.
E16. Messanordnung nach einem der vorhergehenden Absätze, dadurch gekennzeichnet, dass an dem ersten verlagerten Messpunkt eine Lichtquelle (10) und ein Lichtsensor (12) angeordnet ist und an dem zweiten Messort oder Messpunkt eine vorzugsweise gemusterte Reflexionsfläche (11) angeordnet ist oder umgekehrt
E17. Messanordnung nach einem der vorhergehenden Absätze, dadurch gekennzeichnet, dass an dem ersten verlagerten Messpunkt eine Lichtquelle (10) angeordnet ist und an dem zweiten Messort oder Messpunkt ein Lichtsensor (12) angeordnet ist oder umgekehrt.
E18. Messanordnung für ein Fahrrad zur Bestimmung einer Lageveränderung eines ersten Messorts relativ zu einem zweiten Messort an einem starren Bauteil (1), vorzugsweise einer hohlen Tretlagerwelle (1), in Folge einer vorbestimmten Deformation des starren Bauteils, umfassend eine an dem ersten Messort angeordnete Lichtquelle (10), bevorzugt Laserlichtquelle, die in Richtung des zweiten Messorts abstrahlt, sowie entweder eine an dem zweiten Messort angeordnete, vorzugsweise gemusterte Reflexionsfläche (11) und ein an dem ersten Messort angeordneter Lichtsensor (12) oder ein an dem zweiten Messort angeordneter Lichtsensor (12).
E19. Messanordnung nach Absatz E18, dadurch gekennzeichnet, dass das starre Bauteil (1) einen vorzugsweise abgeschlossenen Hohlraum (4) aufweist, in welchem die Lichtquelle (10), der Lichtsensor (12) und gegebenenfalls die Reflexionsfläche (11) angeordnet sind, wobei das starre Bauteil vorzugsweise eine hohle Tretlagerwelle ist.
E20. Messanordnung nach einem der Absätze E18 bis E19, dadurch gekennzeichnet, dass der Abstand von erstem und zweitem Messort zwischen 5 cm und 30 cm liegt und beispielsweise 5 cm, 10 cm, 15 cm, 20 cm, 25 cm, oder 30 cm beträgt und/oder der erste und zweite Messort jeweils an Enden des starren Bauteils liegen.
E21. Messanordnung nach einem der Absätze E18 bis E20, dadurch gekennzeichnet, dass die vorbestimmte Deformation in Folge einer Tretkrafteinleitung auftritt.
E22. Messanordnung nach einem der Absätze E18 bis E21, dadurch gekennzeichnet, dass die relative Lageveränderung der Messorte durch eine räumliche Ortsveränderung und/oder durch eine Veränderung der relativen Orientierung bzw. Ausrichtung gebildet wird.
E23. Messanordnung nach einem der Absätze E18 bis E22, dadurch gekennzeichnet, dass die Deformation des starren Körpers proportional zur einwirkenden Kraft und/oder zum einwirkenden Drehmoment ist.
E24. Messanordnung nach einem der vorhergehenden Absätze, dadurch gekennzeichnet, dass die Messsensorik (7, 8, 10; 11, 12) mit einer Repetitionsrate zwischen 10 und 1000 Hz misst.
E25. Messanordnung nach einem der vorhergehenden Absätze, dadurch gekennzeichnet, dass die Messsensorik (7, 8, 10; 11, 12) die Lageveränderung mit einer Auflösung von wenigstens 20, wenigstens 50, wenigstens 100 oder wenigstens 200 Abtastwerten innerhalb der maximalen Lageveränderung misst.
E26. Messanordnung nach einem der vorhergehenden Absätze, gekennzeichnet durch eine Messeinrichtung zur Messung der Rotationsgeschwindigkeit des starren Bauteils, welche bevorzug als Gyroskop ausgestaltet ist und/oder mit einer Repetitionsrate zwischen 10 und 1000 Hz misst, bevorzugt mit der gleichen Repetitionsrate wie die Messsensorik.
E27. Messanordnung nach einem der vorhergehenden Absätze, gekennzeichnet durch einen Funktransmitter zur drahtlosen Übertragung von Messsignalen bevorzugt gemäß des "ANT+"- oder Bluetooth-Funkstandards.
E28. Messanordnung nach einem der vorhergehenden Absätze, gekennzeichnet durch einen bevorzugt wiederaufladbaren Energiespeicher und/oder eine Verarbeitungseinheit.
E29. Fahrrad mit einer Messanordnung nach einem der vorhergehenden Absätze.

## Patentansprüche

1. Messanordnung für ein Fahrrad zur Bestimmung einer Lageveränderung eines ersten Messorts relativ zu einem zweiten Messort an einem starren Bauteil (1, 2a, 2b, 13) in Folge einer vorbestimmten Deformation des starren Bauteils, umfassend
- einen ersten, freitragenden Ausleger (6), der derart an dem ersten Messort des starren Bauteils lagefest angeordnet ist oder mit dem ersten Messort lagefest verbunden ist, dass der ersten Ausleger zumindest einen ersten verlagerten Messpunkt definiert, der relativ zu dem zweiten Messort die gleiche Lageveränderung aufweist wie der erste Messort, sowie
- optional einen zweiten, freitragenden Ausleger (6), der derart an dem zweiten Messort des starren Bauteils lagefest angeordnet ist oder mit dem zweiten Messort lagefest verbunden ist, dass der zweite Ausleger zumindest einen zweiten verlagerten Messpunkt definiert, der relativ zu dem ersten Messort die gleiche Lageveränderung aufweist wie der zweite Messort,
- eine Messsensorik (7, 8, 10; 11, 12), die an dem ersten verlagerten Messpunkt und dem zweiten Messort oder dem zweiten verlagerten Messpunkt, angeordnet ist.

2. Messanordnung nach Anspruch 1, **dadurch gekennzeichnet, dass** der räumliche Abstand zwischen dem ersten verlagerten Messpunkt und dem zweiten Messort oder dem zweiten verlagerten Messpunkt kleiner ist als der räumliche Abstand zwischen dem ersten und dem zweiten Messort, bevorzugt beträgt der Abstand zwischen dem ersten verlagerten Messpunkt und dem zweiten Messort oder dem zweiten verlagerten Messpunkt weniger als 20mm, 10mm, 5mm, 2mm, 1mm, 0,5 mm, 0,2 mm oder 0,1 mm und/oder der räumliche Abstand von erstem und zweitem Messort liegt zwischen 5 cm und 30 cm und beträgt beispielsweise 5 cm, 10 cm, 15 cm, 20 cm, 25 cm, oder 30 cm.

3. Messanordnung nach einem der vorhergehenden Ansprüche, **dadurch gekennzeichnet, dass** der erste und zweite Messort jeweils an gegenüberliegenden Enden des starren Bauteils (1, 2a, 2b, 13) liegen und/oder dass der oder die verlagerten Messpunkte durch ein Ende, bevorzugt ein freies Ende (6a) des jeweiligen Auslegers (6) gebildet werden und/ oder dass ein einem freien Ende (6a) des Auslegers (6) gegenüberliegendes Ende des Auslegers direkt an dem jeweiligen Messort angeordnet ist und/oder dass der oder die Ausleger einen freitragenden Abschnitt mit einer Länge von wenigstens 1 cm, 2 cm, 5 cm, 10 cm, 15 cm oder 20 cm aufweisen und/oder dass die vorbestimmte Deformation in Folge einer Tretkrafteinleitung auftritt.

4. Messanordnung nach einem der vorhergehenden Ansprüche, **dadurch gekennzeichnet, dass** darin erster und zweiter Ausleger (6) vorgesehen sind, wobei sich vorzugsweise deren freie Enden (6a) gegenüberstehen und/ oder wobei bevorzugt die freitragenden Abschnitte der Ausleger eine identische Länge aufweisen und besonders bevorzugt die freitragenden Abschnitte oder die gesamten Ausleger identische Abmessungen aufweisen und/oder dass die relative Lageveränderung der Messorte bzw. der verlagerten Messpunkte durch eine räumliche Orts veränderung und/oder durch eine Veränderung der relativen Orientierung bzw. Ausrichtung gebildet wird und/oder dass die Deformation des starren Körpers (1, 2a, 2b, 13) proportional zur einwirkenden Kraft und/oder zum einwirkenden Drehmoment ist.

5. Messanordnung nach einem der vorhergehenden Ansprüche, **dadurch gekennzeichnet, dass** das starre Bauteil (1, 2a, 2b, 13) eine Tretlagerwelle (1), vorzugsweise eine hohle Tretlagerwelle, ein Kurbelstern (13) oder eine Tretkurbel (2a, 2b) ist und/oder dass das starre Bauteil eine hohle Tretlagerwelle (1) ist und der oder die Ausleger innerhalb des Hohlraums (4) angeordnet ist/ sind.

6. Messanordnung nach einem der vorhergehenden Ansprüche, **dadurch gekennzeichnet, dass** an dem ersten verlagerten Messpunkt ein Magnet (7) und an dem zweiten Messort oder zweiten verlagerten Messpunkt ein Magnetsensor (8) angeordnet ist oder umgekehrt, wobei bevorzugt das Magnetfeld am Ort des Magnetsensor senkrecht oder im Wesentlichen senkrecht oder parallel zu einer direkten Verbindungslinie zwischen Magnet und Magnetsensor ausgerichtet ist und/oder der Magnet ein Magnetfeld im Bereich von 10mT bis 1T erzeugt und/oder dass mit dem ersten verlagerten Messpunkt ein Bedienelement für ein Dreh- oder Schiebepotentiometer fest verbunden ist und das Dreh- oder Schiebepotentiometer an dem zweiten Messort oder Messpunkt angeordnet ist oder umgekehrt und/oder dass an dem ersten verlagerten Messpunkt eine Lichtquelle (10) und ein Lichtsensor (12) angeordnet ist und an dem zweiten Messort oder Messpunkt eine vorzugsweise gemusterte Reflexionsfläche (11) angeordnet ist oder umgekehrt und/oder dass an dem ersten verlagerten Messpunkt eine Lichtquelle (10) angeordnet ist und an dem zweiten Messort oder Messpunkt ein Lichtsensor (12) angeordnet ist oder umgekehrt.

7. Messanordnung für ein Fahrrad zur Bestimmung einer Lageveränderung eines ersten Messorts relativ zu einem zweiten Messort an einem starren Bauteil (1), vorzugsweise einer hohlen Tretlagerwelle (1), in Folge einer vorbestimmten Deformation des starren Bauteils, umfassend eine an dem ersten Messort angeordnete Lichtquelle (10), bevorzugt Laserlichtquelle, die in Richtung des zweiten Messorts abstrahlt, sowie entweder eine an dem zweiten Messort angeordnete, vorzugsweise gemusterte Reflexionsfläche (11) und ein an dem ersten Messort angeordneter Lichtsensor (12) oder ein an dem zweiten Messort angeordneter Lichtsensor (12).

8. Messanordnung nach Anspruch 7, **dadurch gekennzeichnet, dass** das starre Bauteil (1) einen vorzugsweise abgeschlossenen Hohlraum (4) aufweist, in welchem die Lichtquelle (10), der Lichtsensor (12) und gegebenenfalls die Reflexionsfläche (11) angeordnet sind, wobei das starre Bauteil vorzugsweise eine hohle Tretlagerwelle ist und/oder dass der Abstand von erstem und zweitem Messort zwischen 5 cm und 30 cm liegt und beispielsweise 5 cm, 10 cm, 15 cm, 20 cm, 25 cm, oder 30 cm beträgt und/oder der erste und zweite Messort jeweils an Enden des starren Bauteils liegen und/oder dass die vorbestimmte Deformation in Folge einer Tretkrafteinleitung auftritt und/oder dass die relative Lageveränderung der Messorte durch eine räumliche Ortsveränderung und/oder durch eine Veränderung der relativen Orientierung bzw. Ausrichtung gebildet wird und/oder dass die Deformation des starren Körpers proportional zur einwirkenden Kraft und/oder zum einwirkenden Drehmoment ist.

9. Messanordnung nach einem der vorhergehenden Ansprüche, **dadurch gekennzeichnet, dass** die Messsensorik (7, 8, 10; 11, 12) mit einer Repetitionsrate zwischen 10 und 1000 Hz misst und/oder dass die Messsensorik (7, 8, 10; 11, 12) die Lageveränderung mit einer Auflösung von wenigstens 20, wenigstens 50, wenigstens 100 oder wenigstens 200 Abtastwerten innerhalb der maximalen Lageveränderung misst.

10. Messanordnung nach einem der vorhergehenden Ansprüche, **gekennzeichnet durch** eine Messeinrichtung zur Messung der Rotationsgeschwindigkeit des starren Bauteils, welche bevorzug als Gyroskop ausgestaltet ist und/oder mit einer Repetitionsrate zwischen 10 und 1000 Hz misst, bevorzugt mit der gleichen Repetitionsrate wie die Messsensorik und/oder durch einen Funktransmitter zur drahtlosen Übertragung von Messsignalen bevorzugt gemäß des "ANT+"- oder Bluetooth-Funkstandards und/oder durch einen bevorzugt wiederaufladbaren Energiespeicher und/oder eine Verarbeitungseinheit.

11. Fahrrad mit einer Messanordnung nach einem der vorhergehenden Ansprüche.
